# EUROPEAN PATENT APPLICATION

(11) **EP 1 389 448 A1**
(43) Date of publication of application: **18.02.2004**
(21) Application number: 03254153.4
(22) Date of filing: 30.06.2003
(51) Int. Cl.: A61C 5/06

(54) **Single dose dental restorative material delivery system and method**

(30) Priority: 15.08.2002 US 219652
(71) Applicant: Kerr Corporation, Orange, California 92867 (US)
(72) Inventor: Shellard, Edward, 6900 Lugano (CH); Xie, Xiaoyi, Diamond Bar, California 91765 (US); Higgins, Stephen R., Jr., Foothill Ranch, California 92610 (US)
(74) Representative: Findlay, Alice Rosemary

(57) **Abstract**

A delivery system for supplying a single dose quantity of a two-component dental restorative material includes a dispenser 10 which contains first and second components 28,30 of the dental restorative material. The first and second components 28,30 are stored in separate chambers 20,22 which are sealed with a closure 16. To dispense the dental restorative material, a tip 18 is installed to an end of the dispenser 10 to move the closure 16 to an open position, whereafter plungers 50,52 may be depressed into the chambers 20,22 to dispense the single dose of dental restorative material through the tip 18. The tip 18 may be provided with a static mixer 100 to mix the components 28,30 as it is dispensed.

## Description

The present invention relates to a dental material delivery system, and more particularly to a delivery system for dispensing a single dose of a two-component dental restorative material.

Dental restoratives, such as crowns and bridges, are commonly used to address various dental problems such as restoring a damaged tooth to its original shape, strengthening a tooth, or simply improving the cosmetic appearance of a tooth. In the process of fitting a dental restorative to a patient's tooth, a dentist will typically take x-rays and impressions of the patient's dental anatomy, shape the subject tooth by either grinding away portions of the tooth or building up a damaged tooth, obtain an impression of the tooth, and prepare a crown or bridge to be placed over the shaped tooth (or teeth). Often "permanent" restoratives are prepared in a laboratory which is separate from the dentist's office and, therefore, a temporary dental restorative must be fitted to the shaped tooth in the dental office, to be worn by the patient until the permanent crown or bridge is ready.

Temporary crowns and bridges are typically prepared by a dentist in his office and may be worn by the patient for a period of approximately one week to ten days, or even as long as approximately three to six months. The materials used for temporary crowns and bridges are typically provided in powder/liquid form or paste/paste form and comprise a base material and a catalyst material which causes the base material to harden when the two materials are combined. Advantageously, the temporary crown and bridge materials permit dentists to create temporary dental restoratives with good physical properties in the office at the time the subject tooth is shaped.

To create a temporary dental restorative using a powder/liquid system, a dentist will generally dispense the base and catalyst components in a specific ratio by using a measuring device such as cup or scale. The contents are combined and mixed with a spatula in a mixing well or on a mixing pad until homogeneous. The mixture is transferred to a premade impression or a plastic matrix. Then the impression or matrix with the material is immediately applied to the area of the shaped teeth in a patient's mouth. The material is molded by pressing the impression or plastic matrix. The impression or plastic matrix is removed from the patient's mouth before the material is hardened. The temporary restorative is then separated from the impression or plastic matrix.

For paste/paste systems, materials for forming temporary crowns and bridges have historically been provided in bulk via cartridges having two chambers whereby each component is stored in a separate chamber. The pastes are extruded from their respective cartridge chambers and are automatically mixed through a static mixer in predetermined volume ratios into a premade impression or a plastic matrix. Because the chemistry of the paste/paste components is fairly complicated, the resulting volumetric ratios are rather high, such as 4:1, 5:1, 10:1, and even 20:1. Most commercially available temporary crown and bridge materials are packaged in cartridges having a quantity of the materials sufficient for making several temporary restoratives. For example, a 50 ml cartridge can generally produce approximately 35 single crowns or 20 three-unit bridges.

Bulk dispensing systems presently used for providing temporary dental restorative materials have various drawbacks. Because the components are provided in large quantities, all of the material may not be used before the expiration of the product's recommended shelf life, thereby resulting in wasted material. Material is also frequently wasted during the process of dispensing the individual components, in different ratios, to a well for mixing because it is often difficult to judge the quantity of material which will be required to create an individual restorative. Another drawback to the current bulk dispensing systems is that it is impossible to sterilize the cartridges between patient use, therefore creating a cross contamination situation which is less than ideal.

Dispensing from bulk powder/liquid systems is also relatively time consuming, requiring a dentist or other personnel to retrieve the containers in which the individual components are stored, unseal the containers, measure out quantities of each component in the required ratio, reseal the containers, and then return the containers to storage. The hand spatulation and mixing technique has a disadvantage in that it introduces numerous air bubbles into the mixed pastes. The entrapped air bubbles in the hardened material are detrimental to physical strength and lead to sites for bacterial colonies, fracture sites, and discoloration. Furthermore, it is very difficult to measure out the proper small quantities needed to mix the components in a desired mixing ratio using this technique.

Dispensing pastes from bulk cartridge delivery systems in different volume ratios requires dentists to have delivery systems for use with these ratios, or to change out the plungers used with their current system whenever they need to dispense the temporary restorative material. In addition, a dentist or other personnel needs to remove a cap or a used static mixer from the cartridge before attaching a new static mixer prior to each use. Furthermore, the bulk cartridge delivery systems require more storage space and disinfecting between patent uses.

The delivery system of the present invention provides a convenient means of dispensing two component dental restorative materials in a single-dose quantity. In one aspect of the invention, the system includes first and second components of the dental restorative material which has been formulated for dispensing in a 1:1 ratio.

In one aspect of the invention, a dispenser has a dispenser body incorporating first and second adjacent chambers which are sized to contain single dose amounts of the first and second components. First and second plungers are disposed in the respective chambers and are movable therein to dispense the respective first and second components through dispensing orifices associated with the chambers. The chambers are each individually sealed by a movable closure provided adjacent the dispensing orifice of the respective chambers. Each closure may be moved from an orifice-sealing position to an orifice-unsealing position to unseal its respectively associated orifice, whereby the first and second components may be dispensed from the chambers via the unsealed orifices to a dispensing tip located proximate the orifices for application to a desired target.

The dispensing tip may further include a static mixer which mixes the two components as they are being dispensed. In another aspect of the invention, the dispensing tip is a separate component which is only attached to the dispenser structure defining the chambers, in fluid communication with the orifices, immediately prior to the point in time when it is desired to unseal the chamber orifices. Attachment of the dispensing tip is operative to move the closures to their respective orifice-unsealing positions, thereby enabling the restorative components to be expelled from the chambers, via their respective unsealed orifices, into the dispensing tip.

In another aspect of the invention, a method of providing a single dose of a two-component dental restorative includes the steps of providing a dispenser having first and second chambers sized to contain single-dose amounts of first and second components of the dental restorative, a closure for sealing the chambers, plungers for dispensing the components from the chambers, and a dispensing tip; loading the first chamber of the dispenser with the first component of the dental restorative; loading the second chamber of the dispenser with the second component of the dental restorative; and sealing the chambers with a closure.

In yet another aspect of the present invention, a method of dispensing a single dose of a two-component dental restorative includes providing a single dose of dental restorative as described above, moving the closure to permit the first and second components of the temporary dental restorative to be dispensed from the first and second chambers, attaching the dispensing tip, and moving the plungers to dispense the first and second components from the dispensing tip.

The delivery system at least in the preferred embodiments overcomes drawbacks of the prior art such as those discussed above and is susceptive of use with two-component restorative materials requiring different volumetric ratios for the base and catalyst components.

The invention will now be further described by way of example with reference to the accompanying drawings in which:
FIG. 1 is an exploded perspective view of an exemplary dispenser of the present invention;
FIG. 2 is a partial cross-sectional view of the dispenser of FIG. 1 taken along lines 2-2;
FIG. 3 is a cross-sectional view of the dispenser of FIG. 1 depicting the dispenser tip being attached; and
FIG. 4 is a cross-sectional view similar to FIG. 3 depicting the dispenser tip fully attached.

### Detailed Description

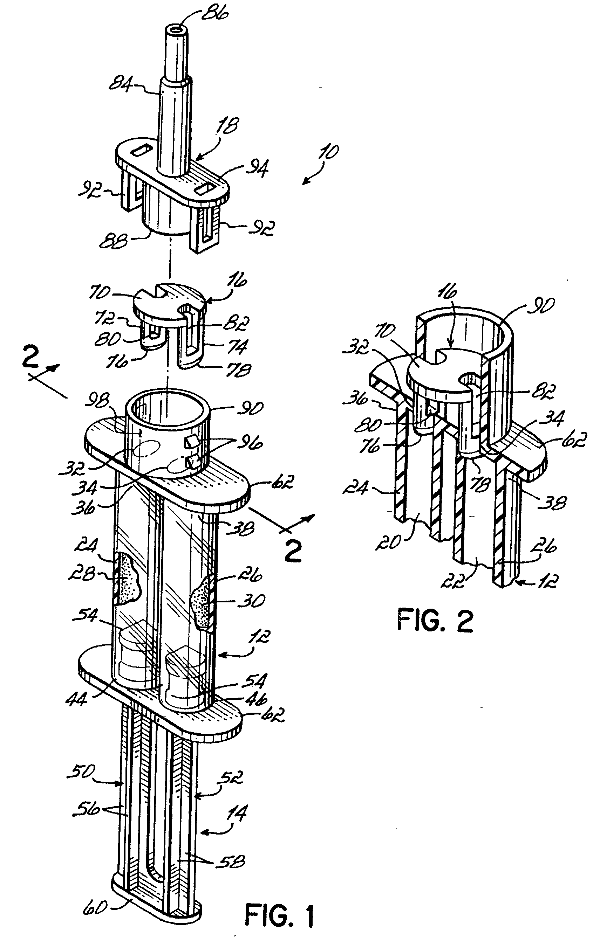

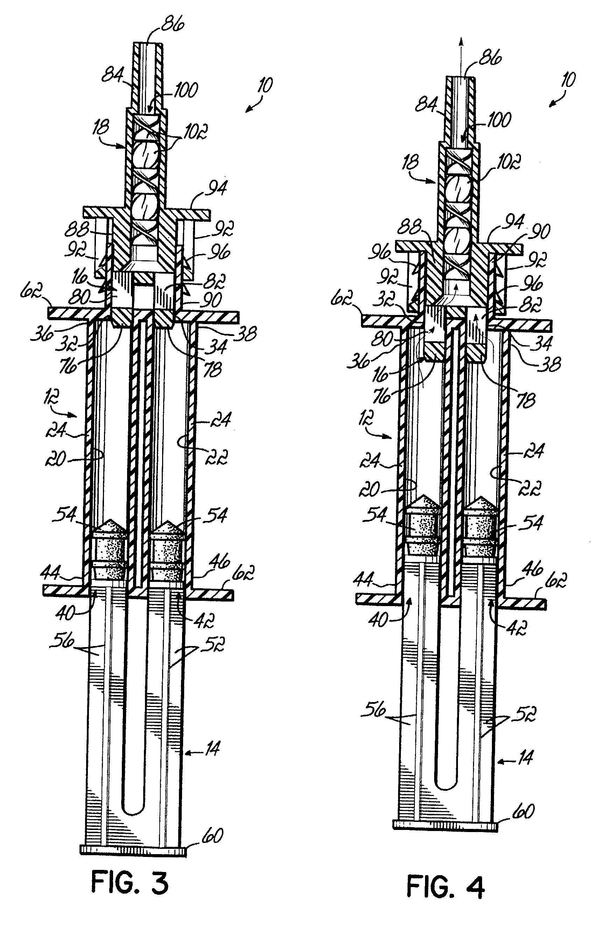

Referring to FIGS. 1-4, there is shown an exemplary dispenser 10 for dispensing a single dose of a two component temporary dental restorative material according to the present invention. The dispenser 10 includes a dispenser body 12, an actuator 14, a closure 16, and a dispenser tip 18. With reference to FIGS. 1 and 3, the dispenser body 12 includes first and second cylindrically-shaped chambers 20, 22 defined by sidewalls 24, 26 and sized to contain the first and second components 28, 30 of the temporary dental restorative material. The first and second chambers 20, 22 are positioned adjacent one another and have dispensing orifices 32, 34 disposed at first ends 36, 38 of the chambers 20, 22 and openings 40, 42 at second ends 44, 46 of the chambers 20, 22 opposite the first ends 36, 38. The openings 40, 42 are sized to receive the actuator 14 which may thereafter be depressed into the chambers 20, 22 to dispense the first and second components 28, 30 of the temporary dental restorative material through the first and second orifices 32, 34, respectively.

The actuator 14 includes first and second plungers 50, 52 which may be received into the first and second chambers 20, 22, respectively, through their respective openings 40, 42. Each plunger 50, 52 includes a piston 54 which may be disposed within the respective chambers 20, 22 and is constructed to slidably seal against the sidewalls 24, 26 of the respective chambers 20, 22. The plungers 50, 52 further include elongated plunger rods 56, 58 which are configured to extend from the respective chambers 20, 22 through the openings 40, 42 whereby the pistons 54 may be urged along the respective chambers 20, 22 to dispense the respective dental restorative components 28, 30 as the respective plunger rods 56, 58 are depressed. In the exemplary embodiment shown, the first and second plungers 50, 52 are connected at their distal ends, opposite the pistons 54, by a thumb pad 60, whereby the pistons 54 may be advanced in unison along the chambers 20, 22 to dispense the first and second components 28, 30 simultaneously. The dispenser body 12 may further include one or more outwardly extending flanges 62 to provide a convenient means to grasp the dispenser 10 and to facilitate depressing the plungers 50, 52 of the actuator 14 into the chambers 20, 22 to dispense the components 28, 30.

The dispenser 10 further includes a closure 16 which may be installed to the dispenser body 12 to seal the first and second orifices 32, 34. Advantageously, the closure 16 prevents premature dispensing of the temporary dental restorative components 28, 30 and protects the components 28, 30 from contaminants prior to use. In the exemplary embodiment shown, the closure 16 includes a disc-shaped base 70 having first and second projections 72, 74 extending from one side of the base 70. Sealing members 76, 78 are formed on the distal ends of the projections 72, 74 opposite the base 70 and are configured to sealingly engage the first and second orifices to thereby seal the first and second chambers 20, 22 when the closure 16 is attached to the dispenser body 12 adjacent the first and second orifices 32, 34 in a first position, as depicted in FIGS. 2 and 3. The closure 16 further includes slot-shaped passages 80, 82 formed between the sealing members 76, 78 and the base 70. These passages 80, 82 provide a path for the components 28, 30 to flow through the orifices 32, 34 when the closure 16 is moved from the first position to a second position, as depicted in FIG. 4, where the sealing members 76, 78 of the closure 16 are moved into the first and second chambers 20, 22, generally in a direction toward the first and second openings 40, 42. Accordingly, the dispenser 10 may be placed into a condition for dispensing the first and second components 28, 30 by moving the closure 16 from the first position to the second position.

The dispenser 10 further includes a dispenser tip 18 which may be attached to the dispenser body 12 adjacent the first and second orifices 32, 34. In the exemplary embodiment shown, the dispenser tip 18 includes an elongate, cylindrically-shaped nozzle 84 having a nozzle outlet 86 through which the combined first and second components 28, 30 may be dispensed to a desired target area. The dispenser tip 18 further includes a cylindrically-shaped protrusion 88 at an end of the dispenser tip 18 opposite the nozzle 84. The protrusion 88 is sized to be received within a corresponding cylindrically-shaped extension 90 of the dispenser body 12, located adjacent the first and second orifices 32, 34. Advantageously, the protrusion 88 on the dispenser tip 18 and the extension 90 on the dispenser body 12 help to align and secure the dispenser tip 18 to the dispenser body 12 so that the first and second components 28, 30 flowing from the first and second orifices 32, 34 may be received into the dispenser tip 18 and dispensed through the nozzle 84.

The dispenser tip 18 may further include one or more hasps 92 provided on a flange 94 of the dispenser tip 18 and extending adjacent the cylindrical protrusion 88. The hasps 92 are configured to engage corresponding tabs 96 provided on an outer surface 98 of the cylindrical extension 90 on the dispenser body 12 whereby the hasps 92 may engage the tabs 96 in an interlocking relationship to secure the dispenser tip 18 to the dispenser body 12.

Advantageously, the cylindrical protrusion 88 on the dispenser tip 18 may be configured to engage the closure 16 as the dispenser tip 18 is installed onto the dispenser body 12 whereby the closure 16 is moved from the first, sealing position to the second position as the dispenser tip 18 is attached to the dispenser body 12. In this manner, the dispenser 10 is placed in condition to dispense the first and second components 28, 30 of the temporary dental restorative material when the dispenser tip 18 is attached to the dispenser body 12. Accordingly, after the dispenser tip 18 has been attached to the body 12, the first and second plungers 50, 52 of the actuator 14 may be urged into the first and second chambers 20, 22 to dispense the first and second components 28, 30 of the dental restorative material through the first and second orifices 32, 34 and through the dispenser tip 18. In one exemplary embodiment, the dispenser tip 18 may further include a mixing element 100 provided within the nozzle 84 and having a series of vanes 102 which are configured to mix the first and second components 28, 30 prior to dispensing from the nozzle outlet 86.

In another exemplary embodiment, the first and second components 28, 30 of the dental restorative material comprise a base and catalyst as described in U.S. Patent No. 5,977,199 to Xie, assigned to the assignee of the present invention and hereby incorporated by reference in its entirety. According to this embodiment, the first component 28 is a catalyst paste comprising at least one polymerizable acrylic monomer, at least one polymerization initiator, at least one polymerization inhibitor, and filler. The second component 30 is a base paste comprising at least one polymerizable acrylic monomer, at least one polymerization accelerator, at least one polymerization inhibitor, and filler. Advantageously, the temporary dental restorative material may be provided in a 1:1 ratio for convenient dispensing in a single-dose quantity by the dispenser 10. While the exemplary embodiment described above depicts a dispenser 10 which is configured to dispense components 28, 30 of a temporary dental restorative material in a single-dose quantity and having a volumetric ratio of approximately 1:1, it will be understood that the dispenser 10 could be configured to accommodate other volumetric ratios by modifying the length or cross-sectional dimensions of one of the chambers 20, 22 with respect to the other chamber. Accordingly, the dispenser 10 described above may easily be configured to accommodate volumetric ratios of approximately 4:1, 5:1, 10:1 or 20:1, or even greater.

In another exemplary embodiment, a method of providing a single dose of temporary dental restorative material includes the step of providing a single-dose dispenser 10 as described above, loading the first chamber 20 of the dispenser 10 with a first component 28 of the single dose of temporary dental restorative, loading the second chamber 22 with a second component 30 of the single dose of temporary dental restorative material, and sealing the first and second chambers 28, 30 with the closure 16.

In another aspect of the invention, a method of dispensing a single dose of temporary dental restorative material includes the steps of providing a temporary dental restorative according to the method described above and further moving the closure 16 from the first position to the second position to thereby permit the first and second components 28, 30 to be dispensed from the first and second orifices 32, 34, attaching the dispenser tip 18 proximate the first and second orifices 32, 34, and moving the first and second plungers 50, 52 to dispense the first and second components 28, 30 through the dispenser tip 18.

The following examples illustrate the embodiments of the present invention.

### Example 1

| **CATALYST PASTE** | |
|---|---|
| Ingredient | Weight % |
| Ethoxylated bisphenol-A-dimethacrylate | 55.88 |
| Dibenzoyl peroxide | 1.0 |
| Butylated hydroxytoluene | 0.12 |
| Fumed silica | 5.0 |
| Barium glass, silanized | 38.0 |

| **BASE PASTE** | |
|---|---|
| Ingredient | Weight % |
| Bis-GMA | 5.0 |
| Urethane dimethacrylate | 40.43 |
| Dibutyl phthalate | 10.0 |
| Dihydroxyethyl-p-toluidine | 4.4 |
| Butylated hydroxytoluene | 0.06 |
| Fumed silica | 4.0 |
| Barium glass, silanized | 36.0 |
| Pigment | 0.11 |

Both the catalyst paste and base paste were separately formed by mixing the ingredients in a planetary mixer. The catalyst paste and base paste were loaded into the separate chambers of a single-dose dispenser as described above. A static mixer equipped with 8 mixing elements was attached and then depressed to unseal the chambers. The catalyst and base pastes were extruded in a 1:1 volume ratio through the static mixer. The mixed paste has a gel time of 35 seconds and a set time of 2 minutes 54 seconds. The paste was directly applied into a premade matrix which was immediately placed on a prepared tooth. After about 1 minute 30 seconds, the matrix with the curing material was removed. The obtained crown was allowed to cure for an additional 2 minutes. After trimming and polishing a temporary crown was formed.

### Example 2

| **BASE PASTE** | |
|---|---|
| Ingredient | Weight % |
| Bis-GMA | 5.0 |
| Urethane dimethacrylate | 42.83 |
| Dibutyl phthalate | 10.0 |
| Dihydroxyethyl-p-toluidine | 2.0 |
| Butylated hydroxytoluene | 0.06 |
| Fumed silica | 4.0 |
| Barium glass, silanized | 36.0 |
| Pigment | 0.11 |

The base paste was formed by mixing the ingredients in a planetary mixer. The catalyst paste from Example 1 and base paste were loaded into the separate chambers of a single-dose dispenser as described above. A static mixer equipped with 8 mixing elements was attached and then depressed to unseal the chambers. The catalyst and base pastes were extruded in a 1:1 volume ratio through the static mixer. The mixed paste has gel time of 1 minute 19 seconds and set time of 6 minutes 3 seconds. The paste was directly applied into a premade matrix which was immediately placed on a prepared tooth. After about 2 minutes, the matrix with the curing material was removed. The obtained crown was allowed to cure for an additional 5 minutes. After trimming and polishing a temporary crown was formed.

While the present invention has been illustrated by the description of various embodiments thereof, and while the embodiments have been described in considerable detail, additional advantages and modifications will readily appear to those skilled in the art. For example, while the invention has been described herein with respect to a two-component temporary dental restorative, it will be understood that two-component restoratives intended for longer, more permanent duration could be utilized as well.

## Claims

**1.** A delivery system for supplying a single-dose quantity of a two-component dental restorative composition, comprising:
a dispenser body having first and second adjacent chambers sized to contain first and second components of the single dose of dental restorative, said first and second chambers having first and second dispensing orifices proximate first ends of said chambers and having first and second openings proximate second ends of said chambers;
first and second components of the single dose of dental restorative disposed within said first and second chambers, respectively;
first and second plungers disposed in said first and second chambers, respectively, through said first and second openings and configured for movement therein to discharge said first and second components through said first and second dispensing orifices;
a closure having first and second sealing members sealingly engageable with said first and second dispensing orifices, respectively, to seal said first and second chambers, respectively, said closure movable between a first position wherein said first and second sealing members seal said first and second orifices to thereby seal said first and second chambers and a second position wherein said first and second sealing members are moved out of engagement with said orifices to permit said first and second components to be dispensed from said orifices by movement of said plungers; and
a dispensing tip attachable to said dispenser body and having an input end proximate said first and second orifices when said dispensing tip is attached to said dispenser body, said input end configured to receive said first and second components of said dental restorative from said first and second orifices, said dispensing tip having an output end through which said first and second components of said dental restorative input to said dispensing tip are output for application to a desired target.

**2.** The delivery system of claim 1, wherein movement of said closure from said first position to said second position is in a direction toward said first and second openings, and wherein said dispensing tip has closure-moving elements located proximate its input end which are configured to engage said closures when said dispensing tip is attached to said dispenser body for moving said closures from said first positions to said second positions and unsealing said first and second orifices when said dispensing tip is attached to said dispenser body.

**3.** The delivery system of claim 2, wherein said closure includes a base which connects said first and second sealing members, and said closure moving elements comprise a cylindrical protrusion which contacts said base and urges said base in a direction which moves said sealing members into said first and second chambers to thereby unseal said first and second orifices when said dispensing tip is attached to said dispenser body.

**4.** The delivery system of any preceding claim, wherein said first and second plungers are connected such that said first and second plungers move in unison when depressed to discharge said first and second components.

**5.** The delivery system of any preceding claim, wherein said first and second components are substantially equal in amounts adequate for mixing in a ratio of approximately 1:1.

**7.** The delivery system of any preceding claim, wherein said first and second components are formulated for use as a temporary dental restorative when combined.

**8.** The delivery system of claim 1, wherein:
said first component is a catalyst paste comprising at least one polymerizable acrylic monomer, at least one polymerization initiator, and at least one polymerization inhibitor, and filler; and
said second component is a base paste comprising at least one polymerizable acrylic monomer, at least one polymerization accelerator, at least one polymerization inhibitor, and filler.

**9.** A method of providing a single dose of a two-component dental restorative composition, comprising:
providing a single-dose dispenser having:
a dispenser body having first and second adjacent chambers sized to contain first and second components of the single dose of dental restorative, the first and second chambers having first and second dispensing orifices proximate first ends of the chambers and having first and second openings proximate second ends of the chambers,
first and second components of the single dose of dental restorative disposed within the first and second chambers, respectively,
first and second plungers disposed in the first and second chambers, respectively, through the first and second openings and configured for movement therein to discharge the first and second components through the first and second dispensing orifices,
a closure having first and second sealing members sealingly engageable with the first and second dispensing orifices, respectively, to seal the first and second chambers, respectively, the closure movable between a first position wherein the first and second sealing members seal the first and second orifices to thereby seal the first and second chambers and a second position wherein the first and second sealing members are moved out of engagement with the orifices to permit the first and second components to be dispensed from the orifices by movement of the plungers, and
a dispensing tip attachable to the dispenser body and having an input end proximate the first and second orifices when the dispensing tip is attached to the dispenser body, the input end configured to receive the first and second components of the dental restorative from the first and second orifices, the dispensing tip having an output end through which the first and second components of the dental restorative input to the dispensing tip are output for application to a desired target;
loading the first chamber with a first component of the single dose of dental restorative;
loading the second chamber with a second component of the single dose of dental restorative; and
sealing the first and second chambers with the closure.

**10.** The method of claim 9, wherein the first and second components of the dental restorative material are formulated to provide a temporary dental restorative when combined.

## Amended claims

### Amended claims in accordance with Rule 86(2) EPC.

**6.** The delivery system of any one of Claims 1 to 4, wherein said first and second components are substantially unequal in amounts adequate for mixing in a ratio substantially different than 1:1.

**7.** The delivery system of any preceding claim, wherein said first and second components are formulated for use as a temporary dental restorative when combined.

**8.** The delivery system of claim 1, wherein:
said first component is a catalyst paste comprising at least one polymerizable acrylic monomer, at least one polymerization initiator, and at least one polymerization inhibitor, and filler; and
said second component is a base paste comprising at least one polymerizable acrylic monomer, at least one polymerization accelerator, at least one polymerization inhibitor, and filler.
